# EUROPÄISCHE PATENTSCHRIFT

(11) **EP 0 536 145 B1**
(45) Veröffentlichungstag und Bekanntmachung des Hinweises auf die Patenterteilung: **05.01.1994**
(21) Anmeldenummer: 91908633.0
(22) Anmeldetag: 25.04.1991
(51) Int. Cl.: B29C 43/02, C08J 5/04, B29B 17/00

(54) **VERFAHREN UND ANLAGE ZUR HERSTELLUNG VON FORMTEILEN AUS VERNETZTEN REAKTIONSKUNSTSTOFFEN**
PROCESS AND INSTALLATION FOR PRODUCING MOULDED COMPONENTS FROM CROSS-LINKED REACTION PLASTICS
PROCEDE ET INSTALLATION DE PRODUCTION DE PIECES MOULEES EN MATIERES PLASTIQUES REACTIONNELLES RETICULEES

(30) Priorität: 23.06.1990 DE 4020109
(43) Veröffentlichungstag der Anmeldung: 14.04.1993
(73) Patentinhaber: PEBRA GmbH Paul Braun, 73704 Esslingen (DE)
(72) Erfinder: BRAUN, Hans-Jochen, D-7310 Plochingen (DE); FRANK, Uwe, D-7000 Stuttgart 61 (DE); LANG, Gusztav, D-8000 München 60 (DE); LUDWIG, Hans-Joachim, D-7441 Schlaitdorf (DE); HÜTTNER, Manfred, D-7318 Lenningen 1 (DE)
(74) Vertreter: Wolf, Eckhard, Dr.-Ing.
(86) Internationale Anmeldenummer: EP9100804
(87) Internationale Veröffentlichungsnummer: WO9200177

(56) Entgegenhaltungen:
- EP-A- 0 111 122
- DD-A- 134 336
- DD-A- 144 885
- DE-A- 2 164 381
- US-A- 3 846 522
- US-A- 4 769 202

## Beschreibung

Die Erfindung betrifft ein Verfahren zur Herstellung von Formteilen aus vernetzten Polyurethan, Polyurethan-Polyharnstoff oder Polyharnstoff-Elastomeren.

Formteile dieser Art können durch Reaktionsschaumgießen RIM (Reaction Injection Moulding) hergestellt werden. Beim Polyurethan-RIM-Prozeß findet bei jedem Schuß eine chemische Reaktion zwischen den gemischten flüssigen Reaktionskomponenten statt. Als Reaktionskomponenten werden bevorzugt die in der DE-B2-2622951 (Bayer) beschriebenen verzweigten Rohstoffe zur Herstellung von Polyurethan-Polyharnstoff-Elastomeren eingesetzt. Je nach Funktionalität (Anzahl der reaktionsfähigen Molekülgruppen) der Reaktionskomponenten ergeben sich weit- oder engmaschig vernetzte Molekülstrukturen, die einer nachträglichen plastischen Verformung des Kunststoffmaterials entgegenwirken. Nicht zuletzt aus diesem Grund konnten bisher Randstücke oder Abfälle derartiger Duromerer oder Elastomerer im Gegensatz zu Thermoplasten bei rein mechanischer Aufbereitung nur als Füllstoffe weiterverwendet oder als Energielieferant bei der Müllverbrennung verbrannt, nicht jedoch einem echten Material-Recycling zugeführt werden (vgl. u.a. Hans-Georg Elias: "Macromoleküle: Struktur, Eigenschaften, Synthesen, Stoffe, Technologie", 4. Auflage, 1981, Seiten 918, 979 und 1004). Hinzu kommt, daß beim diskontinuierlichen RIM-Verfahren bei Abweichung von den relativ engen Prozeßtoleranzen die Gefahr besteht, daß die Formteile in angußnahen und angußfernen Bereichen unterschiedliche Materialeigenschaften erhalten und aufgrund einer Ausgasung von Luft eine porenhaltige Formteiloberfläche entsteht.

Der Erfindung liegt daher die Aufgabe zugrunde, ein Verfahren der eingangs angegebenen Art zu entwickeln, das mit relativ einfachen Formwerkzeugen realisiert werden kann und mit dem großflächige und zugleich dünnwandige Formteile mit über ihre gesamte Erstreckung konstanten Materialeigenschaften und einer hervorragenden Oberflächenqualität hergestellt werden können.

Zur Lösung dieser Aufgabe werden im Falle der Neuherstellung die Verfahrensschritte gemäß Anspruch 1 und im Falle des Recycling die Verfahrensschritte nach den Ansprüchen 5, 10 bis 12 vorgeschlagen. Weitere vorteilhafte Ausgestaltungen und Weiterbildungen der Erfindung ergeben sich aus den abhängigen Ansprüchen.

Die erfindungsgemäße Lösung geht insbesondere von der Erkenntnis aus, daß es sich bei den in Rede stehenden Reaktionskunststoffen auf Polyurethan- und/oder Polyharnstoffbasis um mehrphasige Werkstoffsysteme mit einem segmentierten Aufbau der Primärkette handelt. Aufgrund unterschiedlicher Polaritäten bilden sich einerseits Weichsegmente aus den langkettigen, niedrigschmelzenden Polyolen und andererseits Hartsegmente aus hochschmelzenden Oligomereinheiten, die z.B. aus Isocyanaten und Amin-Kettenverlängerern gebildet werden. Während der chemischen Reaktion entmischen sich die Hart- und Weichsegmente und bilden Domänen aus. Die Weichsegment-Domänen sind dabei für hohe Elastizität, hohes Rückstellvermögen, gute Kaltschlagzähigkeit und hohes Dämpfungsvermögen verantwortlich, während die Hartsegment-Domänen für die erzielbare Steifigkeit und Wärmeformbeständigkeit von Bedeutung sind. Untersuchungen haben nun gezeigt, daß bei erhöhter Temperatur und Anwendung hoher Drücke eine Umstrukturierung zwischen den Weichsegment- und Hartsegment-Domänen stattfindet, die trotz der Vernetzung bei entsprechenden Spannungsgradienten zu einer bleibenden Verformung des räumlich vernetzten Kunststoffes führt. Diese Erkenntnis eröffnet die Möglichkeit einer spanlosen Umformung des vernetzten Reaktionskunststoffes, wobei bei geeigneter Parameterwahl lineare Verformungen von 400% und mehr erzielbar sind.

Zur Herstellung von Formteilen aus Reaktionskunststoffen wird ausgehend von den flüssigen Reaktionskomponenten gemäß der Erfindung dementsprechend folgende Verfahrensweise vorgeschlagen:
- die Reaktionskomponenten des Reaktionskunststoffes werden in flüssigem Zustand gemischt,
- das dabei entstehende Reaktionsgemisch wird in flüssigem Zustand auf eine kontinuierlich oder diskontinuierlich bewegte Trägerbahn unter Bildung einer zusammenhängenden Schicht aufgetragen, vorzugsweise aufgespritzt, aufgegossen oder aufgesprüht, und entlang einer Bewegungsstrecke der Trägerbahn unter Bildung von Halbzeug zumindest teilweise ausgehärtet,
- das Halbzeug wird durch Einwirkung eines Druckes von vorzugsweise 150 bis 400 bar bei einer Temperatur von vorzugsweise 120 bis 350 °C unter Herstellung des Formteils spanlos umgeformt.

Als Reaktionkomponenten, wie Polyol, ein Amin-Kettenverlängerer und Isocyanat, werden vor dem Mischvorgang zweckmäßig durch Luft- und/oder Glasfaserbeimischungen beladen. Die Trägerbahn kann als Gewebe- oder Fasermatte ausgebildet sein, die zusätzlich zur Verstärkung des Halbzeugs und des daraus hergestellten Formteils beitragen kann. Weiter kann die flüssige oder bereits plastische Reaktionskunststoffschicht entlang der Bewegungsstrecke mit einer Abdeck- oder Dekorfolie beschichtet oder kaschiert werden.

Gemäß einer bevorzugten Ausgestaltung der Erfindung wird das entlang der Bewegungsstrecke teilweise ausgehärtete Reaktionsgemisch unter Verringerung der Schichtdicke vorzugsweise durch Pressen oder Walzen verdichtet und/oder kalibriert.

Grundsätzlich ist es möglich, die zusammenhängende, zumindest teilweise ausgehärtete Reaktionskunststoffschicht am Ende der Bewegungsstrecke in plattenförmiges Halbzeug zu zerteilen oder zu einer Halbzeugrolle aufzuwickeln und in dieser Form vor der endgültigen Formteilherstellung zwischenzulagern. Um jedoch eine rationelle Verarbeitung bei hohem Umformgrad zu gewährleisten, ist es vorteilhaft, wenn die zusammenhängende, zumindest teilweise ausgehärtete Reaktionskunststoffschicht am Ende der Bewegungsstrecke unter Herstellung des Formteils fortlaufend zerteilt und zugleich umgeformt wird. Um besonders günstige Materialeigenschaften zu erzielen, ist es weiter von Vorteil, wenn der teilweise ausgehärtete Reaktionskunststoff nach dem Verdichten als Halbzeug und/oder als Formteil bei einer Temperatur von 120 bis 300 °C getempert wird.

Nach einer ersten Variante ist hierzu vorgesehen, Abfallmaterial aus Reaktionskunststoff unter Bildung von Granulat mit einer Korngröße von 0,5 bis 5 mm zu zerkleinern und das Granulat entweder mehrlagig zwischen geheizten Walzen oder im Extrusionsverfahren über eine Breitschlitzdüse zu verpressen und dabei unter Bildung einer zusammenhängenden, gegebenenfalls walzfellartigen Schicht als Halbzeug zu verbinden oder das Granulat bei erhöhter Temperatur zu verpressen und dabei unter Bildung von Pellets oder Platten als Halbzeug zu verbinden. Das auf diese Weise hergestellte Halbzeug kann dann unter Einwirkung eines Druckes von 150 bis 400 bar bei einer Temperatur von 120 bis 350 °C unter Herstellung eines Formteils spanlos umgeformt werden.

Eine weitere Erfindungsvariante sieht vor, daß Abfall-Formteile aus Reaktionskunststoff mit geheizten Walzen unter Bildung von plattenförmigem Halbzeug glattgewalzt werden. Auch dieses Halbzeug kann sodann in der vorbeschriebenen Weise zur Herstellung des Formteils umgeformt werden.

Grundsätzlich ist es zwar möglich, das Granulat auch unmittelbar unter Anwendung der vorstehenden Preßdrücke und Temperaturen zur Herstellung des Formteils zu verpressen. Das hierbei entstehende Erzeugnis ist jedoch sowohl im Aussehen als auch in den Materialeigenschaften von geringerer Qualität. Der Umweg über das Halbzeug oder über einen Spritzvorgang führt infolge der höheren Scherung zu einer wesentlichen Verbesserung in dieser Hinsicht.

Im folgenden wird die Erfindung anhand einiger in der Zeichnung in schematischer Weise dargestellter Ausführungsbeispiele näher erläutert. Es zeigen
- Fig. 1a und b: ein Schema zweier Ausführungsbeispiele einer kontinuierlich arbeitenden Anlage zur Herstellung von Formteilen aus Reaktionskunststoffen;
- Fig. 2a und b: ein Schema einer Fertigungsanlage für plattenförmiges Halbzeug und die Weiterverabeitung des Halbzeugs zu Formteilen;
- Fig. 3a und b: ein Schema einer Fertigungsanlage für aufgewickeltes Halbzeug und die Weiterverarbeitung des Halbzeugs zu Formteilen;

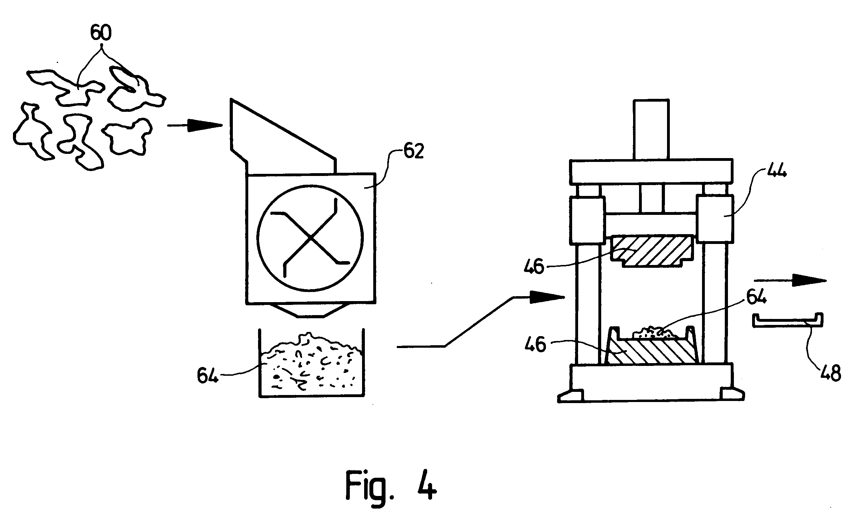

- Fig. 4: ein Schema einer einfachen Recycling-Anlage zur Herstellung von Formteilen aus Kunststoff-Abfällen;
- Fig. 5: ein Schema einer kontinuierlich arbeitenden Recycling-Anlage zur Herstellung von Formteilen aus Regranulat;
- Fig. 6: ein Schema einer Recycling-Anlage zur Herstellung von aufgewickeltem Halbzeug.

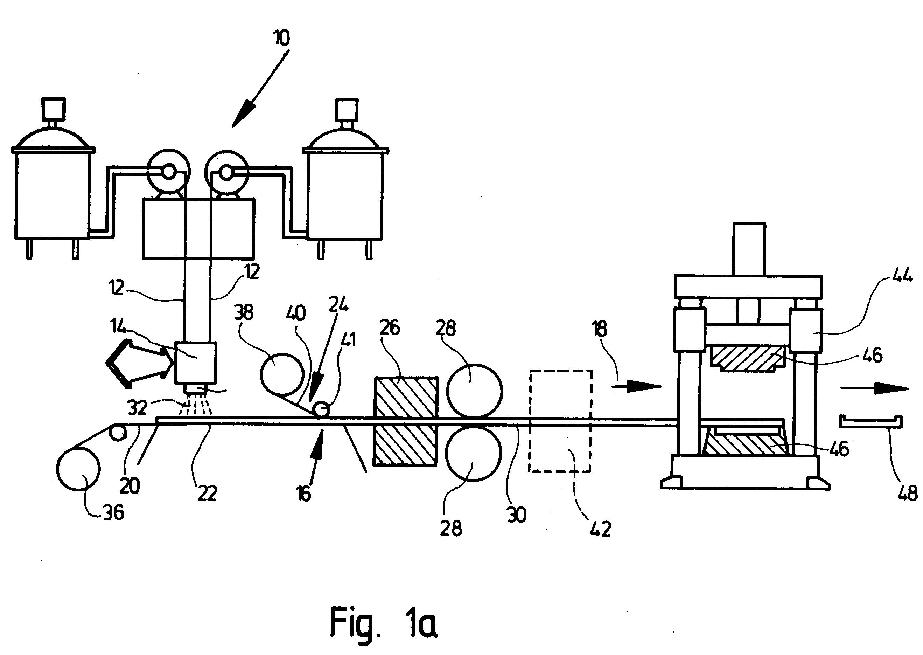

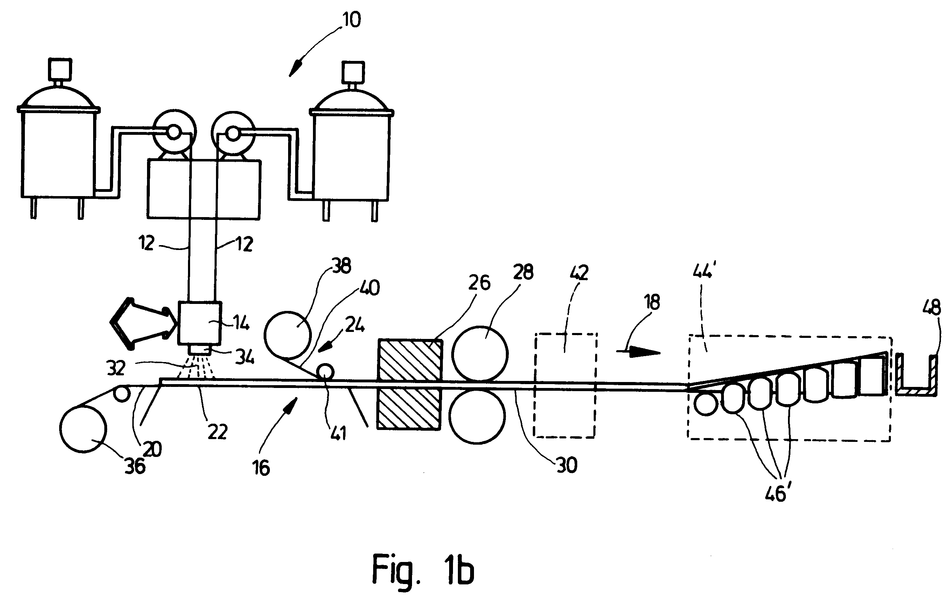

Die in den Fig. 1 bis 3 schematisch dargestellten Fertigungsanlagen bestehen im wesentlichen aus einer Dosierstation 10 für die beiden Reaktionskomponenten Polyol und Isocyanat, einem über Leitungen 12 mit den Reaktionskomponenten beaufschlagten Mischkopf 14, einer Förderstrecke 16 mit einer in Richtung des Pfeils 18 bewegten Trägerbahn 20, mit einer unterhalb des Mischkopfes 14 befindlichen Zugabestelle 22, einer Kaschierstation 24, einer Verdichtungsstation 26 und Abzugswalzen 28 für die ankommende Halbzeugbahn 30. Das flüssige Reaktionsgemisch 32 wird über die nach unten weisende Austrittsöffnung 34 des beweglichen Mischkopfs 14 so auf die in Richtung des Pfeils 18 von der Vorratsrolle 36 abgezogene Trägerbahn 20 gespritzt, daß sich eine zusammenhängende Schicht 30 mit annähernd konstanter Schichtdicke bildet. Durch die Bewegung des Mischkopfes wird zudem erreicht, daß ein im Reaktionsgemisch enthaltender Glasfaserfüllstoff sich beim Auftragen auf die Trägerbahn ungerichtet oder gezielt gerichtet in der Schicht 30 verteilt. Mit der Trägerbahn 20, die am Ende der Förderstrecke 16 wieder abgezogen werden kann, kann zusätzlich eine Matten- oder Gewebebahn zugeführt werden, mit der sich der Reaktionskunststoff verbindet und der daher eine Verstärkungsfunktion zukommt. Das anfänglich flüssige Reaktionsgemisch härtet durch die chemische Reaktion zwischen den Reaktionskomponenten entlang der Förderstrecke 16 allmählich aus. Die sich dabei ändernde Materialkonsistenz wird im Verfahrensverlauf dazu genutzt, daß im Bereich der Kaschierstation 24, in der das Reaktionsgemisch noch klebrig ist, eine von einer Vorratsrolle 38 abgezogene Dekorfolie 40 mit einer Anpreßrolle 41 auf die Schichtoberfläche aufgebracht wird. Im Bereich der als Preß- oder Walzwerk ausgebildeten Verdichtungsstation 26 weist das Reaktionsgemisch eine plastische Verformbarkeit auf, die eine Querschnittsverringerung und eine Materialverdichtung ermöglichen. Hierbei werden auch etwaige Gaseinschlüsse, die zu Oberflächenporen und zu einer Materialtrübung führen könnten, verdrängt, verdichtet und/oder in Lösung gebracht. Im Bereich der Abzugswalzen 28 ist das Material bereits so fest, daß bei dem zum Abziehen notwendigen Walzendruck keine bleibenden Verformungen mehr entstehen.

Bei dem in Fig. la gezeigten Ausführungsbeispiel wird das durch die Walzen 28 abgezogene Halbzeug 30 über eine Vorheizstation 42 fortlaufend einer Umformpresse 44 zugeführt, in der aus dem Halbzeug unter Anwendung von Preßdrücken von 150 bis 400 bar bei einer Temperatur von 120 bis 350 °C mit Hilfe der geheizten Preßwerkzeuge 46 Formteile 48 hergestellt werden. Statt einer Umformpresse 44 kann auch eine nicht dargestellte Profilwalzvorrichtung 44' mit geheizten Profilwalzen 46' verwendet werden (Fig. 1b). Um einen möglichst hohen Umformgrad zu erreichen und innere Spannungen in den Formteilen 48 zu vermeiden, wird der Reaktionskunststoff erst nach der Herstellung des Formteils bei 60 bis 250 °C getempert und dabei bis annähernd 100 % ausgehärtet.

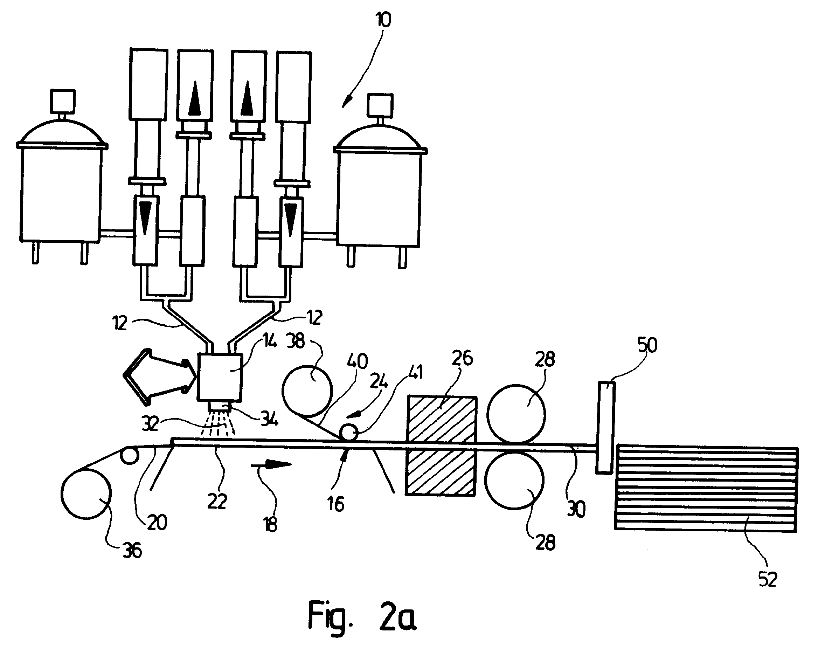

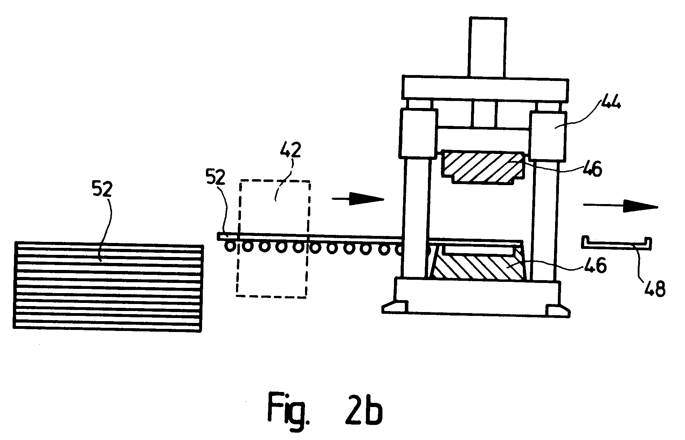

Im Falle des Ausführungsbeispiels nach Fig. 2 a und b wird aus dem aus der Verdichtungsstation 26 abgezogenen Material 30 in einer vorzugsweise als Trennsäge ausgebildeten Trennstation 50 plattenförmiges Halbzeug 52 hergestellt, das in dieser Form etwa drei Minuten bei 120 °C getempert und sodann bis zur Weiterverarbeitung zwischengelagert wird. Die Weiterverarbeitung erfolgt dann in einer von der Halbzeugfertigung unabhängigen Umformstation 44, wie sie in Fig. 2 b dargestellt ist. Auch dort ist eine Vorheizzone 42 vorgesehen, in der das plattenförmige Halbzeug 52 auf eine Temperatur zwischen 120 und 350 °C aufgeheizt wird, bevor es in der Umformpresse 44 mit einem Preßdruck von 150 bis 400 bar unter Bildung des Formteils 48 mit beheizten Formwerkzeugen 46 umgeformt wird.

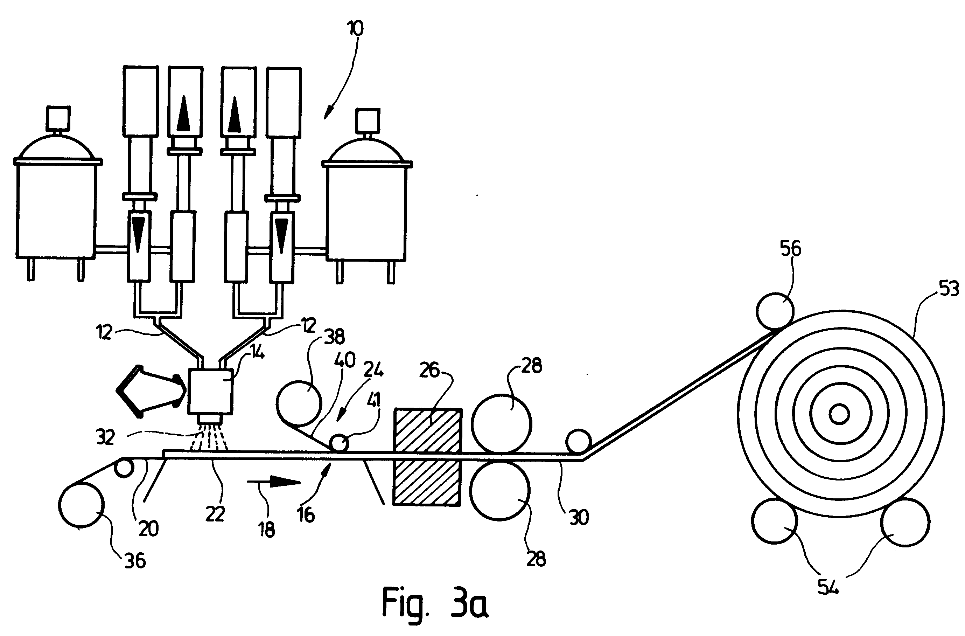

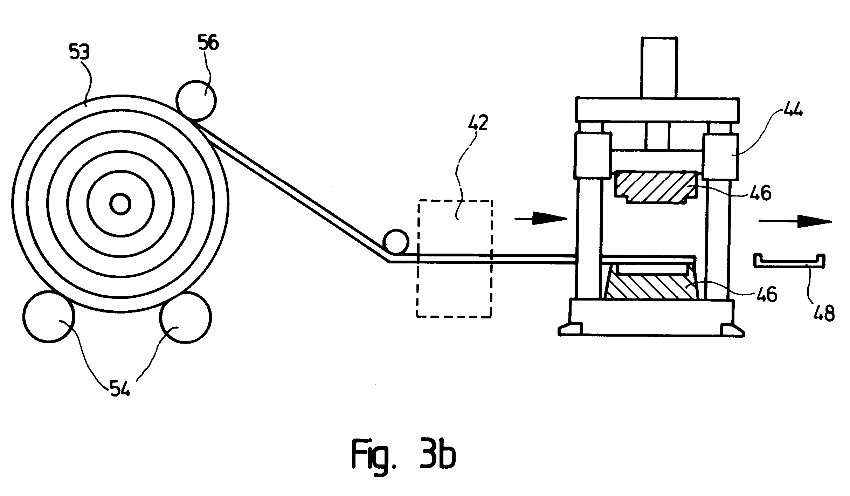

Bei dem in Fig. 3 a und b gezeigten Ausführungsbeispiel wird die etwa 2 bis 3 mm starke Halbzeugbahn zum Zwecke der Zwischenlagerung auf eine Rolle (Coil) 53 mit Hilfe eines Wickelantriebs 54 und einer Andrückwalze 56 aufgewickelt. Die Formteilherstellung kann dann unabhängig von der Halbzeugherstellung unter Verwendung der Halbzeugrolle 53 mit Hilfe einer Umformpresse 44 in der vorbeschriebenen Weise erfolgen.

Die oben beschriebene Umformtechnik kann grundsätzlich auch zur Herstellung von Formteilen 48 aus Reaktionskunststoff-Abfällen verwendet werden. Zu diesem Zweck werden die Kunststoffabfälle 60 in einer Schneidmühle 62 zu einem Regranulat 64 mit einer Korngröße von ca. 0,5 bis 5 mm zerkleinert und in dieser Form unmittelbar oder nach vorheriger Pelletation oder Verbindung zu einem Walzfell als grobes Halbzeug in der oben beschriebenen Weise einer Umformpresse 44 oder einem nicht dargestellten Spritzpreßwerkzeug zugeführt.

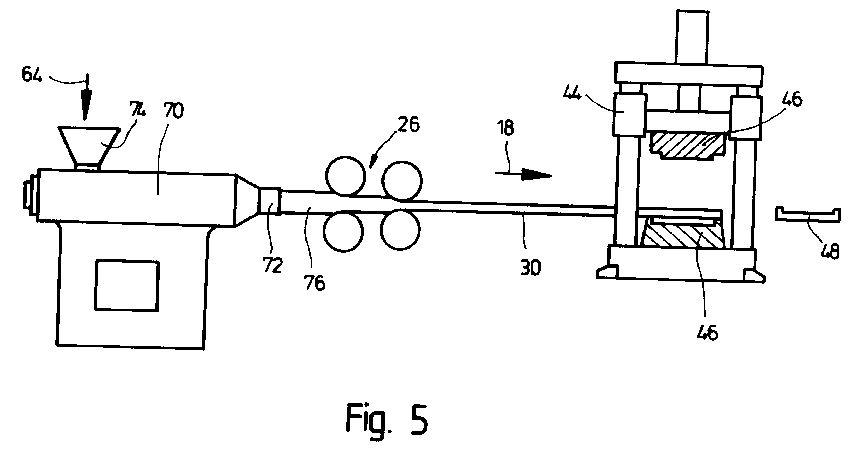

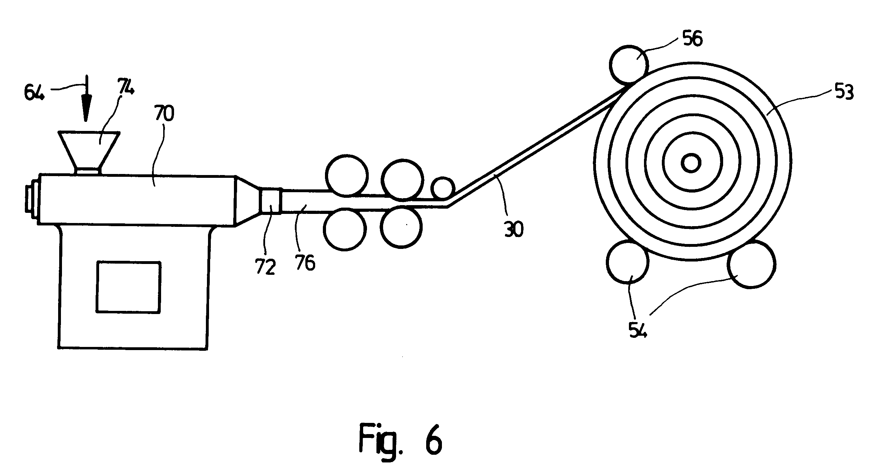

Bei den in den Fig. 5 und 6 gezeigten Ausführungsbeispielen ist ein Extruder 70 mit einer Breitschlitzdüse 72 vorgesehen, in welchem das über den Trichter 74 eingefüllte Regranulat 64 unter Einwirkung von Druck und Wärme verpreßt und in Form eines flachen Stranges 76 extrudiert wird. In einer als Walzstation ausgebildeten Verdichtungsstation 26 wird das Extrudat unter Bildung der zusammenhängenden Halbzeug-Schicht 30 verdichtet und kalibriert. Bei dem in Fig. 5 gezeigten Ausführungsbeispiel wird das aus der Verdichtungsstation 26 austretende Halbzeug 30 fortlaufend einer Umformpresse 44 zugeführt, in der aus dem Halbzeug unter Anwendung von Preßdrücken von 150 bis 400 bar bei einer Temperatur von 120 bis 350 °C mit Hilfe geheizter Preßwerkzeuge 46 Formteile 48 hergestellt werden.

Bei dem in Fig. 6 gezeigten Ausführungsbeispiel wird die etwa 2 bis 3 mm starke Halbzeugbahn 30 zum Zwecke der Zwischenlagerung auf eine Rolle 53 mit Hilfe eines Wickelantriebs 54 und einer Andrückwalze 56 aufgewickelt. Die Formteilherstellung kann dann unabhängig von der Halbzeugherstellung erfolgen (vgl. 3b).

## Patentansprüche

1. Verfahren zur Herstellung von Formteilen aus Reaktionskunststoffen, bestehend aus vernetzten Polyurethan-, Polyurethan-Polyharnstoff- oder Polyharnstoff-Elastomeren, **gekennzeichnet durch** folgende Verfahrensschritte:
- die Reaktionskomponenten des Reaktionskunststoffes werden in flüssigem Zustand gemischt,
- das dabei entstehende Reaktionsgemisch (32) wird in flüssigem Zustand unter Bildung einer zusammenhängenden Schicht auf eine kontinuierlich oder diskontinuierlich bewegte Trägerbahn (20) aufgetragen und entlang einer Bewegungsstrecke (16) der Trägerbahn unter Bildung von Halbzeug ausgehärtet,
- das Halbzeug wird durch Einwirkung eines Druckes von 150 bis 400 bar bei einer Temperatur von 120 bis 350 °C unter Herstellung des Formteils (48) spanlos umgeformt.

2. Verfahren nach Anspruch 1, **dadurch gekennzeichnet,** daß die Reaktionskomponenten vor dem Mischvorgang durch Luft- und/oder Glasfaserbeimischungen beladen werden.

3. Verfahren nach Anspruch 1 oder 2, **dadurch gekenn****zeichnet,** daß die Trägerbahn (20) als Gewebe- oder Fasermatte ausgebildet ist oder eine solche enthält.

4. Verfahren nach einem der Ansprüche 1 bis 3, **da****durch gekennzeichnet,** daß die noch flüssige oder plastische Reaktionskunststoffschicht (30) entlang der Bewegungsstrecke mit einer Abdeck- oder Dekorfolie (40) beschichtet oder kaschiert wird.

5. Verfahren zur Herstellung von Formteilen aus Reaktionskunststoffen, bestehend aus vernetzten Polyurethan-, Polyurethan-Polyharnstoff- oder Polyharnstoff-Elastomeren, **gekennzeichnet durch** folgende Verfahrensschritte:
- Abfallmaterial aus Reaktionskunststoff wird unter Bildung von Granulat zerkleinert,
- das Granulat wird unter Aufheizung auf 150 bis 400 °C verdichtet und unter Bildung einer zusammenhängenden Schicht als Halbzeug extrudiert,
- das Halbzeug wird unter Einwirkung eines Druckes von 150 bis 400 bar bei einer Temperatur von 120 bis 350 °C unter Herstellung des Formteils spanlos umgeformt.

6. Verfahren nach einem der Ansprüche 1 bis 5, **da****durch gekennzeichnet,** daß die zusammenhängende Schicht (30) unter Verringerung ihrer Schichtdicke vorzugsweise durch Pressen oder Walzen verdichtet oder kalibriert wird.

7. Verfahren nach einem der Ansprüche 1 bis 6, **da****durch gekennzeichnet,** daß die zusammenhängende Schicht (30) in plattenförmiges Halbzeug (52) zerteilt oder zu einer Halbzeugrolle (53) aufgewickelt und in dieser Form zwischengelagert wird.

8. Verfahren nach einem der Ansprüche 1 bis 6, **da****durch gekennzeichnet,** daß die zusammenhängende Schicht (30) unter Herstellung von Formteilen (48) fortlaufend zerteilt und umgeformt wird.

9. Verfahren nach einem der Ansprüche 1 bis 8, **da****durch gekennzeichnet,** daß der Reaktionskunststoff nach dem Verdichten als Halbzeug (52,53) und/oder als Formteil (48) bei einer Temperatur von 120 bis 300 °C getempert wird.

10. Verfahren zur Herstellung von Formteilen aus Reaktionskunststoffen, bestehend aus vernetzten Polyurethan-, Polyurethan-Polyharnstoff- oder Polyharnstoff-Elastomeren, **gekennzeichnet durch** folgende Verfahrensschritte:
- Abfallmaterial aus Reaktionskunststoff wird unter Bildung von Granulat zerkleinert,
- das Granulat wird mit geheizten Walzen mehrlagig zusammengepreßt und dabei unter Bildung einer zusammenhängenden walzfellartigen Schicht als Halbzeug verbunden,
- das Halbzeug wird unter Einwirkung eines Druckes von 150 bis 400 bar bei einer Temperatur von 120
bis 350 °C unter Herstellung des Formteils spanlos umgeformt.

11. Verfahren zur Herstellung von Formteilen aus Reaktionskunststoffen, bestehend aus vernetzten Polyurethan-, Polyurethan-Polyharnstoff- oder Polyharnstoff-Elastomeren, **gekennzeichnet durch** folgende Verfahrensschritte:
- Abfallmaterial aus Reaktionskunststoff wird unter Bildung von Granulat zerkleinert,
- das Granulat wird portionsweise verpreßt und dabei unter Bildung von Pellets oder Platten als Halbzeug verbunden,
- das Halbzeug wird durch Einwirkung eines Druckes von 150 bis 400 bar bei einer Temperatur von 120 bis 350 °C unter Herstellung des Formteils spanlos umgeformt.

12. Verfahren zur Herstellung von Formteilen aus Reaktionskunststoffen, bestehend aus vernetzten Polyurethan-, Polyurethan-Polyharnstoff- oder Polyharnstoff-Elastomeren, **gekennzeichnet durch** folgende Verfahrensschritte:
- Abfallformteile aus Reaktionskunststoff werden mit geheizten Walzen unter Bildung von plattenförmigem Halbzeug glattgewalzt,
- das Halbzeug wird durch Einwirkung eines Druckes von 150 bis 400 bar bei einer Temperatur von 120 bis 350 °C unter Herstellung des Formteils spanlos umgeformt.

## Claims

1. A process for the production of moulded articles made of reaction plastics which consist of cross-linked polyurethane, polyurethane/polyurea or polyurea elastomers, characterised by the following process steps:
- the reaction components for the reaction plastic are mixed in the liquid state,
- the reaction mixture (32) thereby produced is applied in the liquid state to a continuously or intermittently moving conveyer belt (20) to form a coherent layer and cured along a moving section (16) to form a semi-finished product,
- the semi-finished product is thermoformed by the action of a pressure of 150 to 400 bar at a temperature of 120 to 350°C to produce the moulded article (48).

2. A process according to Claim 1, characterised in that air and/or glass fibres are added to the reaction components before the mixing process.

3. A process according to Claim 1 or 2, characterised in that the conveyer belt (20) is designed as fabric or fibre matting or contains such a material.

4. A process according to one of Claims 1 to 3, characterised in that the still liquid or plastic layer of reaction plastic (30) is coated or laminated with a covering or decorative film (40) along the moving section.

5. A process for the production of moulded articles made of reaction plastics which consist of cross-linked polyurethane, polyurethane polyurea or polyurea elastomers, characterised by the following process steps:
- scrap material made of reaction plastic is crushed to form granules,
- the granules are compressed while being heated to 150 to 400°C and extruded to form a coherent layer as a semi-finished product,
- the semi-finished product is thermoformed under the action of a pressure of 150 to 400 bar at a temperature of 120 to 350°C to produce the moulded article.

6. A process according to one of Claims 1 to 5, characterised in that the coherent layer (30) is compressed or sized by reducing the thickness of the layer by compression moulding or rolling.

7. A process according to one of Claims 1 to 6, characterised in the coherent layer (30) is divided into sheets as a semi-finished product (52) or wound up into a semi-finished product roll (53) and temporarily stored in this form.

8. A process according to one of Claims 1 to 6, characterised in that the coherent layer (30) is continuously divided and formed to produce moulded articles (48).

9. A process according to one of Claims 1 to 8, characterised in that after compression the reaction plastic is annealed at a temperature of 120 to 300°C as a semi-finished product (52, 53) and/or as a moulded article (48).

10. A process for the production of moulded articles made of reaction plastics which consist of cross-linked polyurethane, polyurethane/polyurea or polyurea elastomers, characterised by the following process steps:
- scrap material made of reaction plastic is crushed to form granules,
- the granules are pressed together in a multi-layered manner using heated rollers and thereby bonded to form a coherent sheeted-out type of layer as a semi-finished product,
- the semi-finished product is thermoformed under the action of a pressure of 150 to 400 bar at a temperature of 120 to 350°C to produce the moulded article.

11. A process for the production of moulded articles made of reaction plastics which consist of cross-linked polyurethane, polyurethane/polyurea or polyurea elastomers, characterised by the following process steps:
- scrap material made of reaction plastic is crushed to form granules,
- the granules are compressed in batches and thereby bonded to form pellets or plates as a semi-finished product,
- the semi-finished product is thermoformed by the action of a pressure of 150 to 400 bar at a temperature of 120 to 350°C to produce the moulded article.

12. A process for the production of moulded articles made of reaction plastics which consist of cross-linked polyurethane, polyurethane/polyurea or polyurea elastomers, characterised by the following process steps:
- scrap moulded articles made of reaction plastic are rolled out smooth using heated rollers to produce sheets as a semi-finished product,
- the semi-finished product is thermoformed by the action of a pressure of 150 to 400 bar at a temperature of 120 to 350°C to produce the moulded article.

## Revendications

1. Procédé de production de pièces moulées en matières plastiques réactionnelles, composées d'élastomères réticulés de polyuréthane, de polyuréthane-polycarbamide ou de polycarbamide, caractérisé par les phases de procédé suivantes:
- les constituants réactionnels de la matière plastique réactionnelle sont mélangés à l'état liquide,
- le mélange réactionnel (32), alors formé, est appliqué à l'état liquide sur une bande (20) déplacée en continu ou en discontinu, en formant une couche cohérente, puis durci le long d'une section de transport (16) de la bande, en formant un demi-produit,
- le demi-produit est transformé sans enlèvement de copeaux, sous l'effet d'une pression de 150 à 400 bars et d'une température de 120 à 350°C, en produisant la piéce moulée (48).

2. Procédé suivant la revendication 1, caractérisé en ce que les constituants réactionnels sont chargés d'additions d'air et/ou de fibres de verre avant l'opération de mélange.

3. Procédé suivant l'une des revendications 1 et 2, caractérisé en ce que la bande (20) est réalisée sous forme de mat de tissu ou de fibres, ou comporte un tel mat.

4. Procédé suivant l'une quelconque des revendications 1 à 3, caractérisé en ce que la couche de matière plastique réactionnelle (30), encore liquide ou plastique, est enduite ou doublée, le long de la section de transport, d'une feuille de couverture ou décorative (40).

5. Procédé de production de pièces moulées en matières plastiques réactionnelles, composées d'élastomères réticulés de polyuréthane, de polyuréthane-polycarbamide ou de polycarbamide, caractérisé par les phases suivantes de procédé:
- des déchets de matière plastique réactionnelle sont broyés en formant du granulat,
- le granulat est comprimé sous un chauffage de 150 à 400°C, et extrudé en un demi-produit en formant une couche cohérente,
- le demi-produit est transformé sans enlèvement de copeaux, sous l'effet d'une pression de 150 à 400 bars et d'une température de 120 à 350°C, en produisant la pièce moulée.

6. Procédé suivant l'une quelconque des revendications 1 à 5, caractérisé en ce que la couche cohérente (30) est comprimée ou calibrée, par compression ou laminage de préférence, avec une réduction de son épaisseur de couche.

7. Procédé suivant l'une quelconque des revendications 1 à 6, caractérisé en ce que la couche cohérente (30) est partagée en un demi-produit en forme de plaque (52), ou est enroulée en un rouleau de demi-produit (53), et entreposée sous cette forme.

8. Procédé suivant l'une quelconque des revendications 1 à 6, caractérisé en ce que la couche cohérente (30) est partagée et transformée en continu, en produisant des pièces moulées (48).

9. Procédé suivant l'une quelconque des revendications 1 à 8, caractérisé en ce que la matière plastique réactionnelle est recuite sous une température de 120 à 300°C, après la compression en demi-produit (52, 53) et/ou en pièce moulée (48).

10. Procédé de production de piéces moulées en matières plastiques réactionnelles, composées d'élastomères réticulés de polyuréthane, de polyuréthane-polycarbamide, ou de polycarbamide, caractérisé par les phases de procédé suivantes:
- des déchets de matière plastique réactionnelle sont broyés en formant du granulat,
- le granulat, comprimé en plusieurs couches par des rouleaux chauffés, est alors lié sous forme de demi-produit, en formant une couche cohérente analogue à une feuille brute,
- le demi-produit est transformé sans enlèvement de copeaux, sous l'effet d'une pression de 150 à 400 bars et d'une température de 120 à 350°C, en produisant la pièce moulée.

11. Procédé de production de pièces moulées en matières plastiques réactionnelles, composées d'élastomères réticulés de polyuréthane, de polyuréthane-polycarbamide, ou de polycarbamide, caractérisé par les phases de procédé suivantes:
- des déchets de matière plastique réactionnelle sont broyés en formant du granulat,
- le granulat, comprimé en discontinu, est alors lié sous forme de demi-produit, en formant des boulettes ou des plaques,
- le demi-produit est transformé sans enlèvement de copeaux, sous l'effet d'une pression de 150 à 400 bars et d'une température de 120 à 350°C, en produisant la pièce moulée.

12. Procédé de production de pièces moulées en matières plastiques réactionnelles, composées d'élastomères réticulés de polyuréthane, de polyuréthane-polycarbamide, ou de polycarbamide, caractérisé par les phases de procédé suivantes:
- des déchets de pièces moulées en matière plastique réactionnelle sont polis par des rouleaux chauffés, en formant un demi-produit en forme de plaque,
- le demi-produit est transformé sans enlèvement de copeaux, sous l'effet d'une pression de 150 à 400 bars et d'une température de 120 à 350°C, en produisant la pièce moulée.
